# EUROPÄISCHE PATENTANMELDUNG

(11) **EP 2 607 324 A1**
(43) Veröffentlichungstag der Anmeldung: **26.06.2013**
(21) Anmeldenummer: 11195602.5
(22) Anmeldetag: 23.12.2011
(51) Int. Cl.: C02F 1/72, B63J 4/00, C02F 1/00

(54) **Verfahren und Vorrichtung zur Behandlung von Ballastwasser auf Schiffen**

(71) Anmelder: Evonik Industries AG, 45128 Essen (DE)
(72) Erfinder: Meier, Jürgen, 61118 Bad Vilbel (DE); Kuhn, Frank Dieter, 63571 Gelnhausen (DE); Siebenlist, Sven, 63741 Aschaffenburg (DE)

(57) **Zusammenfassung**

Zur Behandlung von Ballastwasser wird bei Aufnahme von Ballastwasser in ein Schiff dem Ballastwasser Gleichgewichtsperessigsäure und Katalase zugegeben, wobei Gleichgewichtsperessigsäure in einer Menge von 5 bis 50 mg/l Peressigsäure zugegeben wird und Katalase in einer Menge zugegeben wird, die im Ballastwasser innerhalb von 120 h den Gehalt des mit der Gleichgewichtsperessigsäure eingebrachten Wasserstoffperoxids auf weniger als 2 mg/l zersetzt.

Zur Behandlung des Ballastwassers eignet sich eine Vorrichtung umfassend einen Ballastwassertank (1), eine Leitung (2,3,4,5,6,7,8) zum Befüllen des Ballastwassertanks und eine Leitung (8,9,3,4,10) zum Entleeren des Ballastwassertanks, wobei mit der Leitung zum Befüllen des Ballastwassertanks Dosiervorrichtungen für Gleichgewichtsperessigsäure (15) und Katalase (16) verbunden sind und mit der Leitung zum Entleeren des Ballastwassertanks eine Dosiervorrichtung (17) für ein Reduktionsmittel verbunden ist.

## Beschreibung

Die Erfindung betrifft ein Verfahren und eine Vorrichtung zur Behandlung von Ballastwasser auf Schiffen.

Die meisten Frachtschiffe sind mit Ballastwassertanks ausgestattet, die mit Ballastwasser gefüllt werden, wenn das Schiff ohne Ladung oder mit geringer Ladung fährt, um eine stabile Lage des Schiffs zu gewährleisten und ein Kentern des Schiffs zu vermeiden. Beim Befüllen der Ballastwassertanks werden mit dem Wasser Mikroorganismen, wie Bakterien, pflanzliches und tierisches Plankton, sowie deren Sporen aufgenommen und durch das Entleeren der Ballastwassertanks in einem anderen Hafen oder Küstengewässer über weite Strecken transportiert. Die Verbreitung von Organismen auf diesem Weg in Ökosysteme außerhalb ihres natürlichen Lebensraums ist unerwünscht und kann zu erheblichen Problemen führen.

Eine solche Verbreitung von Organismen mit Ballastwasser kann durch die Behandlung des Ballastwassers mit einem Biozid vermieden werden.

US 5,256,423 beschreibt ein Verfahren zur Abtötung von Cysten von giftigem Plankton durch Zugabe von 10 bis 500 ppm Wasserstoffperoxid oder Wasserstoffperoxid bildender Verbindungen zu Ballastwasser. Wasserstoffperoxid hat jedoch keine ausreichend breite biozide Wirkung, so dass durch eine Ballastwasserbehandlung mit Wasserstoffperoxid die Anforderungen der internationalen Seeschifffahrtsorganisation (IMO) an eine wirksame Ballastwasserbehandlung gemäß D2-Standard der "International Convention for the Control and Management of Ships' Ballast Water and Sediments" (2004) nicht immer erfüllt werden können.

EP 1 006 084 beschreibt ein Verfahren zur Behandlung von Ballastwasser durch Zugabe von 0,1 bis 200 ppm einer Percarbonsäure. Die Percarbonsäure ist bevorzugt Peressigsäure in Form einer Gleichgewichtsperessigsäure, die eine wesentlich höhere biozide Wirkung als Wasserstoffperoxid hat. Y. de Lafontaine et al., Ecotoxicology and Enviromental Safety 71 (2008) 355-369 haben für Peressigsäure im Microtox®-Test eine mehr als hundertfach höhere biozide Wirkung als für Wasserstoffperoxid gefunden. Eine Ballastwasserbehandlung mit Gleichgewichtsperessigsäure der Marke PERACLEAN® Ocean wurde von der IMO zur Ballastwasserbehandlung zugelassen.

EP 1 671 932 beschreibt ein Verfahren zur Behandlung von Ballastwasser durch Zugabe von 10 bis 500 ppm Wasserstoffperoxid oder Wasserstoffperoxid bildender Verbindungen in Kombination mit Eisen(II)-Ionen, Katalase oder Iod. Das in EP 1 671 932 beschriebene Verfahren hat keine Zulassung der IMO zur Ballastwasserbehandlung.

Die Erfinder der vorliegenden Erfindung haben nun gefunden, dass sich die Wirksamkeit der aus EP 1 006 084 bekannten Ballastwasserbehandlung mit Gleichgewichtsperessigsäure noch weiter steigern lässt, wenn dem Ballastwasser Katalase zusammen mit Gleichgewichtsperessigsäure zugesetzt wird. Vorteile ergeben sich vor allem für Ballastwasser mit niedriger Temperatur und bei geringer Salinität des Ballastwassers. Darüber hinaus vereinfacht die Zugabe von Katalase zusammen mit Gleichgewichtsperessigsäure eine Entfernung von nicht verbrauchter Peressigsäure vor dem Ablassen von behandeltem Ballastwasser.

Gegenstand der Erfindung ist deshalb ein Verfahren zur Behandlung von Ballastwasser auf einem Schiff, bei dem bei Aufnahme von Ballastwasser in das Schiff dem Ballastwasser Gleichgewichtsperessigsäure und Katalase zugegeben werden, wobei Gleichgewichtsperessigsäure in einer Menge von 5 bis 50 mg/l Peressigsäure zugegeben wird und Katalase in einer Menge zugegeben wird, die im Ballastwasser innerhalb von 120 h den Gehalt des mit der Gleichgewichtsperessigsäure eingebrachten Wasserstoffperoxids auf weniger als 2 mg/l zersetzt.

Gegenstand der Erfindung ist außerdem eine Vorrichtung zur Behandlung von Ballastwasser eines Schiffes, umfassend einen Ballastwassertank, eine Leitung zum Befüllen des Ballastwassertanks und eine Leitung zum Entleeren des Ballastwassertanks, wobei mit der Leitung zum Befüllen des Ballastwassertanks Dosiervorrichtungen für Gleichgewichtsperessigsäure und Katalase verbunden sind und mit der Leitung zum Entleeren des Ballastwassertanks eine Dosiervorrichtung für ein Reduktionsmittel verbunden ist.

Bei dem erfindungsgemäßen Verfahren wird dem Ballastwasser bei Aufnahme in das Schiff Gleichgewichtsperessigsäure und Katalase zugegeben.

Gleichgewichtsperessigsäure bezeichnet erfindungsgemäß eine Mischung, die im Wesentlichen aus Wasser, Wasserstoffperoxid, Essigsäure und Peressigsäure besteht und in der diese Komponenten in einem chemischen Gleichgewicht entsprechend Gleichung (I) stehen.

CH₃COOH + H₂O₂ ⇆ CH₃COOOH + H₂O (I)

Vorzugsweise enthält die Gleichgewichtsperessigsäure etwa 15 Gew.-% Peressigsäure, etwa 14 Gew.-% Wasserstoffperoxid und etwa 27 Gew.-% Essigsäure. Eine geeignete Gleichgewichtsperessigsäure mit dieser Zusammensetzung ist von Evonik Industries unter dem Markennamen PERACLEAN® Ocean erhältlich.

Die Gleichgewichtsperessigsäure enthält vorzugsweise zusätzlich zu Wasser, Wasserstoffperoxid, Essigsäure und Peressigsäure bis zu 5 Gew.-% einer Mineralsäure, vorzugsweise Polyphosphorsäure. Der Zusatz der Mineralsäure beschleunigt die Einstellung des chemischen Gleichgewichts entsprechend Gleichung (I). Die Gleichgewichtsperessigsäure enthält vorzugsweise außerdem bis zu 1 Gew.-% eines Metallionen komplexierenden Stabilisators, wobei Pyrophosphate und chelatisierende Phosphonsäuren besonders bevorzugt sind.

Die Gleichgewichtsperessigsäure wird dem Ballastwasser in einer Menge von 5 bis 50 mg Peressigsäure pro Liter Ballastwasser zugegeben, vorzugsweise in einer Menge von 10 bis 25 mg/l. Die Zugabe der Peressigsäure erfolgt vorzugsweise in einen Ballastwasserstrom, der in Ballastwassertanks eines Schiffes gefördert wird.

Bei dem erfindungsgemäßen Verfahren wird dem Ballastwasser Katalase in einer Menge zugegeben, die im Ballastwasser innerhalb von 120 h den Gehalt des mit der Gleichgewichtsperessigsäure eingebrachten Wasserstoffperoxids auf weniger als 2 mg/l zersetzt. Vorzugsweise wird soviel Katalase zugesetzt, dass die Konzentration an Wasserstoffperoxid bereits innerhalb 24 h auf einen Wert von weniger als 2 mg/l abnimmt. Die dazu erforderliche Menge Katalase hängt von der Menge an zugegebener Gleichgewichtsperessigsäure, dem Gehalt an Wasserstoffperoxid in der zugegebenen Gleichgewichtsperessigsäure, der Aktivität der verwendeten Katalase, sowie der Temperatur und dem Salzgehalt des Ballastwassers ab und kann leicht durch Routineversuche ermittelt werden. Vorzugsweise wird Katalase in einer Menge von 0,1 bis 40 Einheiten je Liter Ballastwasser (U/l) zugegeben.

Für das erfindungsgemäße Verfahren können alle Katalasen eingesetzt werden, die eine Zersetzung von Wasserstoffperoxid gemäß Gleichung (II) katalysieren.

2 H₂O₂ → 2 H₂O + O₂ (II)

Vorzugsweise wird eine wässrige Lösung einer Katalase verwendet. Besonders geeignet ist eine unter dem Markennamen OPTIMASE® CA 400L von der Firma Genencor erhältliche Katalase.

Die Reihenfolge der Zugabe von Gleichgewichtsperessigsäure und Katalase zum Ballastwasser kann beliebig gewählt werden. Die Zugabe der Katalase erfolgt vorzugsweise getrennt von der Zugabe der Gleichgewichtsperessigsäure. Vorzugsweise wird die Katalase dem gleichen Ballastwasserstrom zugegeben wie die Gleichgewichtsperessigsäure, wobei die Zugabestellen für Gleichgewichtsperessigsäure und Katalase räumlich voneinander getrennt sind. Vorzugsweise erfolgt die Zugabe an Zugabestellen, die räumlich so weit voneinander getrennt sind, dass die zuerst zugegebene Komponente mit dem Ballastwasser vermischt ist bevor die zweite Komponente zugegeben wird.

Die Temperatur des Ballastwassers unterliegt bei dem erfindungsgemäßen Verfahren keinen Beschränkungen. Vorzugsweise weist das Ballastwasser bei Aufnahme in das Schiff eine Temperatur im Bereich von 0 bis 22 °C auf, besonders bevorzugt im Bereich von 0 bis 18 °C. In diesem Temperaturbereich wird mit dem erfindungsgemäßen Verfahren eine höhere Wirksamkeit erzielt als mit dem aus dem Stand der Technik bekannten Verfahren, so dass mit geringeren Mengen an Peressigsäure eine ausreichend wirksame Behandlung von Ballastwasser erzielt wird. Eine Erwärmung des Ballastwassers ist deshalb nicht erforderlich.

Das Ballastwasser kann ein Süßwasser, z.B. aus einem See oder Fluss, ein Brackwasser mit geringer Salinität oder ein Meerwasser mit hoher Salinität sein. Vorzugsweise weist das Ballastwasser bei Aufnahme in das Schiff eine Salinität im Bereich von 0 bis 16 auf. Der Begriff Salinität bezeichnet dabei die dimensionslose Salinität S auf der Practical Salinity Scale 1978. In diesem Bereich der Salinität wird bei dem erfindungsgemäßen Verfahren überraschenderweise ein langsamerer Abbau von Peressigsäure als bei dem aus

EP 1 006 084 bekannten Verfahren erreicht, so dass mit geringeren Mengen an Peressigsäure eine ausreichend wirksame Behandlung von Ballastwasser erzielt wird.

In einer bevorzugten Ausführungsform des erfindungsgemäßen Verfahrens wird vor dem Ablassen von behandeltem Ballastwassers der Gehalt an Peressigsäure durch Zugabe eines Reduktionsmittels auf weniger als 1 mg/l verringert. Vorzugsweise werden Reduktionsmittel wie Natriumsulfit, Natriumhydrogensulfit oder Natriumthiosulfat verwendet, die Peressigsäure innerhalb weniger Sekunden zu Essigsäure reduzieren. Besonders bevorzugte Reduktionsmittel sind Natriumsulfit und Natriumhydrogensulfit. Das erfindungsgemäße Verfahren hat in dieser Ausführungsform den Vorteil, dass für eine praktisch vollständige Entfernung von Peressigsäure eine geringere Mengen an Reduktionsmittel benötigt wird, da kein oder nur eine geringer zusätzlicher Verbrauch an Reduktionsmittel durch eine Reduktion von Wasserstoffperoxid entsteht.

Die Zugabe des Reduktionsmittels erfolgt vorzugsweise in einen Ballastwasserstrom, der aus Ballastwassertanks eines Schiffes abgelassen wird.

Vorzugsweise wird in dem behandelten Ballastwasser der Gehalt an Peressigsäure bestimmt, vorzugsweise mit einem amperometrischen Sensor, und mit dem bestimmten Gehalt an Peressigsäure die Zugabe des Reduktionsmittels geregelt. Das erfindungsgemäße Verfahren hat in dieser Ausführungsform den Vorteil, dass auch mit einfach gebauten Sensoren für Peressigsäure, die eine Querempfindlichkeit für Wasserstoffperoxid aufweisen, die Zugabe des Reduktionsmittels ausreichend genau geregelt werden kann, damit der zulässige Restgehalt an Peressigsäure ohne Überdosierung von Reduktionsmittel eingehalten wird.

Gegenstand der Erfindung ist außerdem eine Vorrichtung zur Behandlung von Ballastwasser eines Schiffes, mit der sich das erfindungsgemäße Verfahren ausführen lässt. Die Vorrichtung umfasst mindestens einen Ballastwassertank, eine Leitung zum Befüllen des Ballastwassertanks und eine Leitung zum Entleeren des Ballastwassertanks. Mit der Leitung zum Befüllen des Ballastwassertanks sind Dosiervorrichtungen für Gleichgewichtsperessigsäure und Katalase verbunden. Mit der Leitung zum Entleeren des Ballastwassertanks ist eine Dosiervorrichtung für ein Reduktionsmittel verbunden.

Die Leitung zum Befüllen des Ballastwassertanks und die Leitung zum Entleeren des Ballastwassertanks können als getrennte Leitungen ausgeführt sein. Vorzugsweise werden die Leitungen jedoch so kombiniert, dass abschnittsweise eine gemeinsame Leitung zum Befüllen und zum Entleeren des Ballastwassertanks verwendet wird. Vorzugsweise sind in einem solchen gemeinsamen Leitungsabschnitt Einrichtungen angeordnet, die sowohl bei Befüllen des Ballastwassertanks als auch bei Entleeren des Ballastwassertanks eingesetzt werden, insbesondere eine Pumpe zum Fördern des Ballastwassers und Messvorrichtungen, wie eine Durchflussmessvorrichtung, eine Temperaturmessvorrichtung und/oder eine Messvorrichtung für die Salinität. Die erfindungsgemäße Vorrichtung kann mehrere Ballastwassertanks umfassen, die eine gemeinsame Leitung zum Befüllen und eine gemeinsame Leitung zum Entleeren aufweisen.

Die Dosiervorrichtung für Gleichgewichtsperessigsäure umfasst vorzugsweise einen Vorratsbehälter für Gleichgewichtsperessigsäure und ein Regelventil oder eine regelbare Pumpe für eine kontinuierliche Dosierung von Gleichgewichtsperessigsäure in die Leitung zum Befüllen des Ballastwassertanks. Zwischen dem Regelventil oder der regelbaren Pumpe und der Leitung zum Befüllen des Ballastwassertanks ist vorzugsweise ein Massendurchflussmesser oder ein Volumendurchflussmesser angeordnet, mit dem sich die dosierte Menge an Gleichgewichtsperessigsäure messen und das Regelventil oder die regelbaren Pumpe ansteuern lassen, um die Menge an dosierter Gleichgewichtsperessigsäure zu regeln. Die Dosiervorrichtung für Gleichgewichtsperessigsäure umfasst vorzugsweise zusätzlich ein Rückschlagventil, das verhindert, dass Ballastwasser in einen Vorratsbehälter für Gleichgewichtsperessigsäure gelangen kann.

Die Dosiervorrichtung für Katalase umfasst vorzugsweise in gleicher Weise einen Vorratsbehälter für eine wässrige Lösung von Katalase und ein Regelventil oder eine regelbare Pumpe, sowie bevorzugt einen Massendurchflussmesser oder einen Volumendurchflussmesser, für die Dosierung von Katalase und die Regelung der Menge an dosierter Katalase. Auf einen Massendurchflussmesser oder Volumendurchflussmesser kann jedoch verzichtet werden, wenn als regelbare Pumpe eine zwangsfördernde Dosierpumpe, wie beispielsweise eine Membranpumpe, Zahnradpumpe oder Kolbenpumpe, eingesetzt wird, die die Einstellung eines berechneten Volumenstroms ermöglicht.

Die Leitung zum Befüllen des Ballastwassertanks ist vorzugsweise mit einer Durchflussmessvorrichtung versehen, mit der die Dosiervorrichtungen für Gleichgewichtsperessigsäure und Katalase angesteuert werden. Durch eine solche Ansteuerung wird sichergestellt, dass bei Aufnahme von Ballastwasser auch bei Schwankungen des Ballastwasserstroms der gewünschte Gehalt an Peressigsäure und Katalase im Ballastwasser erzielt wird.

Vorzugsweise ist die Leitung zum Befüllen des Ballastwassertanks zusätzlich mit einer Temperaturmessvorrichtung und/oder einer Messvorrichtung für die Salinität versehen, mit der die Dosiervorrichtung für Katalase angesteuert wird. Die Messung der Salinität kann auf Basis von Dichtemessungen und vorzugsweise auf Basis der elektrischen Leitfähigkeit mit einem Leitfähigkeitssensor erfolgen. Durch eine solche Ansteuerung der Dosiervorrichtung für Katalase lässt sich die Menge an dosierter Katalase entsprechend der Abhängigkeit der katalytischen Aktivität von der Temperatur und der Salinität einstellen und so der gewünschte Gehalt an Wasserstoffperoxid im behandelten Ballastwasser bei einem geringen Verbrauch an Katalase zuverlässig einhalten.

Die Dosiervorrichtung für Reduktionsmittel umfasst vorzugsweise einen Vorratsbehälter für eine wässrige Lösung des Reduktionsmittels und ein Regelventil oder eine regelbare Pumpe für eine kontinuierliche Dosierung von Reduktionsmittel in die Leitung zum Entleeren des Ballastwassertanks. Zwischen dem Regelventil oder der regelbaren Pumpe und der Leitung zum Entleeren des Ballastwassertanks ist vorzugsweise ein Massendurchflussmesser oder ein Volumendurchflussmesser angeordnet, mit dem sich die dosierte Menge an Reduktionsmittel messen und das Regelventil oder die regelbaren Pumpe ansteuern lassen, um die Menge an dosiertem Reduktionsmittel zu regeln. Auf einen Massendurchflussmesser oder Volumendurchflussmesser kann jedoch verzichtet werden, wenn als regelbare Pumpe eine zwangsfördernde Dosierpumpe, wie beispielsweise eine Membranpumpe, Zahnradpumpe oder Kolbenpumpe, eingesetzt wird, die die Einstellung eines berechneten Volumenstroms ermöglicht.

Die Leitung zum Entleeren des Ballastwassertanks ist vorzugsweise mit einer Durchflussmessvorrichtung und mit einem Sensor für den Gehalt an Peressigsäure versehen, mit denen die Dosiervorrichtung für ein Reduktionsmittel angesteuert wird. Durch eine solche Ansteuerung der Dosiervorrichtung für ein Reduktionsmittel wird sichergestellt, dass auch bei Schwankungen des Ballastwasserstroms die zu einer praktisch vollständigen Umsetzung von Peressigsäure erforderliche Menge an Reduktionsmittel ohne Überdosierung an Reduktionsmittel dosiert wird und das Ballastwasser nach der Reduktion noch einen ausreichenden Gehalt an gelöstem Sauerstoff und keine umweltgefährdenden Gehalte an Peressigsäure oder Reduktionsmittel aufweist.

Der Sensor für den Gehalt an Peressigsäure ist vorzugsweise ein amperometrischer Sensor, besonders bevorzugt ein Sensor, an dem Peressigsäure gemäß Gleichung (III) reduziert wird.

CH₃COOOH + 2 H⁺ + 2 e⁻ → CH₃COOH + H₂O (III)

Geeignete amperometrische Sensoren für Peressigsäure sind im Handel erhältlich, beispielsweise von der Firma ProMinent® unter der Bezeichnung DULCOTEST® PAA. Ebenfalls geeignet sind im Handel angebotene amperometrische Sensoren zur Bestimmung des Gesamtchlorgehalts, beispielsweise die von der Firma ProMinent® unter der Bezeichnung DULCOTEST® CTE-1 angebotenen Sensoren. Die Verwendung eines amperometrischen Sensors zur Bestimmung des Gehalts an Peressigsäure ermöglicht einen weitgehend automatisierten Betrieb der erfindungsgemäßen Vorrichtung durch Personal, wie zum Beispiel eine Schiffsbesatzung, das keine Ausbildung im Betrieb von Analysengeräten hat.

Der Sensor für den Gehalt an Peressigsäure wird vorzugsweise in einem Seitenstrom der Leitung zum Entleeren des Ballastwassertanks angeordnet, um Beschädigungen des Sensors durch im Wasserstrom mitgeführte Feststoffe zu vermeiden. Zum gleichen Zweck wird im Seitenstrom vorzugsweise ein Filter stromaufwärts von dem Sensor angeordnet.

Die erfindungsgemäße Vorrichtung umfasst vorzugsweise eine Steuereinrichtung, die aus der Flussrate des Ballastwassers beim Entleeren des Ballastwassertanks und der Konzentration an Peressigsäure im Ballastwasser eine Menge an Reduktionsmittel zur Verringerung des Gehalts an Peressigsäure auf einen gewünschten Wert berechnet und die Dosiervorrichtung für das Reduktionsmittels ansteuert. Die Steuereinrichtung kann als fest verdrahtete Steuerung oder als Berechnungs- und Steuerprogramm auf einem Prozessleitrechner ausgeführt sein. Die Berechnung der Menge an Reduktionsmittel aus der Flussrate des Ballastwassers und der Konzentration an Peressigsäure im Ballastwasser kann mit empirischen, durch Versuche ermittelten Umrechnungsfaktoren oder mit aus der Stöchiometrie der Reduktionsreaktion berechneten Umrechnungsfaktoren erfolgen. Für ein salzfreies Ballastwasser, das kein Wasserstoffperoxid mehr enthält und eine Reduktion mit einer wässrigen Lösung von Natriumsulfit können die Umrechnungsfaktoren auf Basis der Reaktionsgleichung (IV) berechnet werden.

CH₃COOOH + Na₂SO₃ → CH₃COOH + Na₂SO₄ (IV)

Analog können für eine Reduktion mit Natriumhydrogensulfit die Umrechnungsfaktoren auf Basis der Reaktionsgleichung (V) berechnet werden.

CH₃COOOH + NaHSO₃ → CH₃COOH + NaHSO₄ (V)

Für flüssige Reduktionsmittel, die über eine zwangsfördernde Dosierpumpe dosiert werden, kann aus der berechneten Menge an Reduktionsmittel direkt der an der Dosierpumpe einzustellende Volumenstrom berechnet und die Dosierpumpe dementsprechend angesteuert werden.

In einer bevorzugten Ausführungsform der erfindungsgemäßen Vorrichtung ist auch die Leitung zum Entleeren des Ballastwassertanks mit einer Messvorrichtung für die Salinität versehen, mit der die Dosiervorrichtung für ein Reduktionsmittel angesteuert wird. Vorzugsweise wird die Dosiervorrichtung von einer Steuereinrichtung angesteuert, in der die erforderliche Menge an Reduktionsmittel in Abhängigkeit von der Salinität berechnet wird. Vorzugsweise wird dabei die für ein salzfreies Ballastwasser berechnete Menge an Reduktionsmittel mit einem durch Versuche ermittelten Korrekturfaktor für die Salinität korrigiert. Für salzhaltiges Ballastwasser und eine Reduktion mit einer wässrigen Lösung von Natriumsulfit wird vorzugsweise die für ein salzfreies Ballastwasser berechnete Menge an Reduktionsmittel um einen zur Salinität proportionalen Anteil vergrößert. Die Berücksichtigung der Salinität bei der Dosierung des Reduktionsmittels ermöglicht eine zuverlässige Verringerung des Gehalts an Peressigsäure bis unter vorgegebene Grenzwerte auch bei veränderlichem Salzgehalt des Ballastwassers, ohne dass es zu einer Überdosierung von Reduktionsmittel kommt.

In einer besonders bevorzugten Ausführungsform der erfindungsgemäßen Vorrichtung ist die Leitung zum Entleeren des Ballastwassertanks mit einem zusätzlichen Sensor für den Gehalt an Wasserstoffperoxid versehen und die erfindungsgemäße Vorrichtung umfasst eine Steuereinrichtung, die aus der Flussrate des Ballastwassers beim Entleeren des Ballastwassertanks und den Konzentrationen an Peressigsäure und Wasserstoffperoxid im Ballastwasser die Menge an Reduktionsmittel zur Verringerung der Gehalte an Peressigsäure und Wasserstoffperoxid auf einen gewünschten Wert berechnet und die Dosiervorrichtung für das Reduktionsmittels ansteuert.

In einer weiteren bevorzugten Ausführungsform der erfindungsgemäßen Vorrichtung ist in der Leitung zum Befüllen des Ballastwassertanks vor den Dosiervorrichtungen für Gleichgewichtsperessigsäure und Katalase eine Abtrennvorrichtung für Partikel mit einer Größe im Bereich von 2 bis 100 µm angeordnet. Als Abtrennvorrichtung eignen sich dabei Filter und Hydrocyclone. Durch eine Abtrennung von Partikeln in diesem Größenbereich lässt sich der Bedarf an Gleichgewichtsperessigsäure und Katalase für die Ballastwasserbehandlung verringern und die Wirksamkeit des Verfahrens bei der Entfernung von lebenden Organismen aus dem Ballastwasser weiter verbessern.

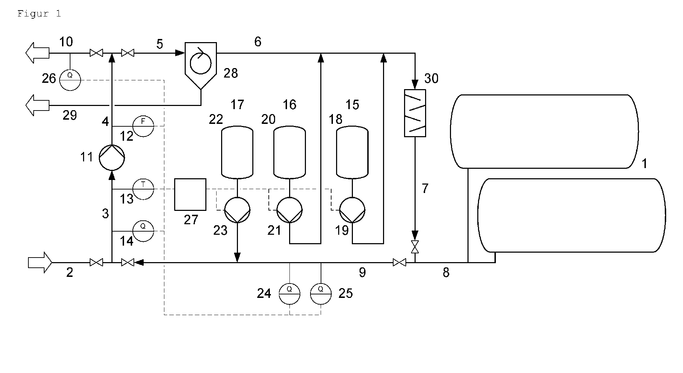

Figur 1 zeigt eine bevorzugte Ausführungsform der erfindungsgemäßen Vorrichtung, bei der abschnittsweise eine gemeinsame Leitung zum Befüllen und zum Entleeren des Ballastwassertanks verwendet wird. Die Vorrichtung umfasst Ballastwassertanks (1). Leitungsabschnitte (2) bis (8) bilden eine Leitung zum Befüllen der Ballastwassertanks. Leitungsabschnitte (8), (9), (3), (4) und (10) bilden eine Leitung zum Entleeren der Ballastwassertanks. Die Leitung zum Befüllen der Ballastwassertanks und die Leitung zum Entleeren der Ballastwassertanks weisen dabei gemeinsame Abschnitte (3), (4) und (8) auf.

In den gemeinsamen Abschnitten (3) und (4) ist eine Pumpe (11) zum Fördern von Ballastwasser in die Ballastwassertanks und aus den Ballastwassertanks angeordnet. In den gemeinsamen Abschnitten (3) und (4) sind außerdem eine Durchflussmessvorrichtung (12), eine Temperaturmessvorrichtung (13) und Messvorrichtung (14) für die Salinität angeordnet.

Mit Leitungsabschnitt (6) der Leitung zum Befüllen der Ballastwassertanks ist eine Dosiervorrichtung (15) für Gleichgewichtsperessigsäure und eine Dosiervorrichtung (16) für Katalase verbunden. Mit Leitungsabschnitt (9) der Leitung zum Entleeren der Ballastwassertanks ist eine Dosiervorrichtung (17) für ein Reduktionsmittel verbunden. Die Dosiervorrichtung (15) für Gleichgewichtsperessigsäure umfasst einen Vorratsbehälter (18) für Gleichgewichtsperessigsäure und eine regelbare Pumpe (19). Die Dosiervorrichtung (16) für Katalase umfasst einen Vorratsbehälter (20) für eine wässrige Lösung von Katalase und eine regelbare Pumpe (21). Die Dosiervorrichtung (17) für ein Reduktionsmittel umfasst einen Vorratsbehälter (22) für eine wässrige Lösung des Reduktionsmittels und eine regelbare Pumpe (23).

Mit Leitungsabschnitt (9) der Leitung zum Entleeren der Ballastwassertanks sind außerdem ein amperometrischer Sensor (24) für Peressigsäure und ein Sensor (25) für Wasserstoffperoxid verbunden. Alternativ können die beiden Sensoren (24, 25) auch mit Leitungsabschnitt (8) verbunden sein. In dieser Alternative können mit den beiden Sensoren auch die Konzentrationen an Peressigsäure und Wasserstoffperoxid im behandelten Ballastwasser bei Befüllen der Ballastwassertanks überwacht werden.

Mit Leitungsabschnitt (10) der Leitung zum Entleeren der Ballastwassertanks ist ein zweiter amperometrischer Sensor (26) für Peressigsäure verbunden. Mit Leitungsabschnitt (10) kann optional auch ein zweiter Sensor für Wasserstoffperoxid verbunden sein.

Die Vorrichtung von Figur 1 weist einen Prozessleitrechner (27) auf, der mit dem Messwert der Durchflussmessvorrichtung (12) die regelbare Pumpe (19) zur Dosierung von Gleichgewichtsperessigsäure ansteuert. Der Prozessleitrechner (27) steuert außerdem mit den Messwerten der Durchflussmessvorrichtung (12), der Temperaturmessvorrichtung (13) und der Messvorrichtung (14) für die Salinität die regelbare Pumpe (21) zur Dosierung der wässrigen Lösung von Katalase an und steuert mit den Messwerten der Durchflussmessvorrichtung (12), der Messvorrichtung (14) für die Salinität, des amperometrischen Sensors (24) für Peressigsäure und des Sensors (25) für Wasserstoffperoxid die regelbare Pumpe (23) zur Dosierung der wässrigen Lösung des Reduktionsmittels an. Der Prozessleitrechner (27) überwacht außerdem beim Entleeren der Ballastwassertanks mit den Messwerten des Sensors (25) für Wasserstoffperoxid und des zweiten amperometrischen Sensors (26) für Peressigsäure die Einhaltung von Grenzwerten für den Gehalt an Wasserstoffperoxid und Peressigsäure in dem Ballastwasser. Für diese Überwachung können auch die Messwerte eines zusätzlichen Sensors für Wasserstoffperoxid, der mit Leitungsabschnitt (10) verbunden ist, verwendet werden.

Die Vorrichtung von Figur 1 weist außerdem einen Hydrozyklon (28) auf, mit dem beim Befüllen der Ballastwassertanks Partikel mit einer Größe von 2 bis 100 µm aus dem Ballastwasserstrom abgetrennt und mit einem Teilstrom über die Leitung (29) ausgeschleust werden. Die Vorrichtung von Figur 1 weist zusätzlich in der Leitung zum Befüllen des Ballastwassertanks stromabwärts von den Dosiervorrichtungen (15) und (16) eine als statischen Mischer (30) ausgeführte Mischvorrichtung auf, mit der die dosierte Gleichgewichtsperessigsäure und die dosierte Katalase in dem Ballastwasser verteilt werden, bevor dieses den Ballastwassertanks (1) zugeführt wird.

Die erfindungsgemäße Vorrichtung ermöglicht einerseits eine wirksame und zuverlässige Behandlung von Ballastwasser, bei der Mikroorganismen bei der Aufnahme von Ballastwasser in das Schiff weitgehend abgetötet werden und stellt andererseits in einfacher Weise und mit geringem Chemikalienverbrauch sicher, dass bei Ablassen des behandelten Ballastwassers die Gehalte an Peressigsäure und Wasserstoffperoxid im Ballastwasser so gering sind, dass sie keine nachteiligen Auswirkungen auf das Gewässer und die darin lebenden Organismen haben, in das das behandelte Ballastwasser abgelassen wird.

Die nachfolgenden Beispiele verdeutlichen die Erfindung, ohne jedoch den Gegenstand der Erfindung zu beschränken.

### Beispiele:

Peressigsäurestabilität in behandeltem Wasser

Der Einfluss einer gemeinsamen Zugabe von Gleichgewichtsperessigsäure und Katalase auf die Abnahme der Gehalte an Wasserstoffperoxid und Peressigsäure wurde für salzarmes und salzreiches Wasser bei unterschiedlichen Temperaturen untersucht. Dazu wurden bei 23 °C bzw. 2 °C Leitungswasser bzw. Meerwasser aus der Nordsee (Texel/NL, Salinität 25,9) mit 150 mg/l Gleichgewichtsperessigsäure PERACLEAN® Ocean und unterschiedlichen Mengen einer Katalaselösung Optimase® CA 400L der Firma Genencor (spezifische Aktivität 3743 Einheiten/g Lösung) versetzt, wobei die Katalaselösung vor der Zugabe zur genaueren Dosierung um den Faktor 1000 bzw. 10000 mit vollentsalztem Wasser verdünnt wurde. Anschließend wurde das behandelte Wasser bei den angegebenen Temperaturen in Glasflaschen gelagert und die Gehalte an Wasserstoffperoxid und Peressigsäure durch Probenahmen und photometrische Bestimmung des Gehalts an Wasserstoffperoxid (Reagens Dikaliumtitanoxiddioxalatdihydrat, Absorption bei 385 nm) und Peressigsäure (Reagens 2,2'-Azino-bis(3-ethylbenzothiazolin-6-sulfonsäure (ABTS), Absorption bei 412 nm) verfolgt.

Figuren 2 und 3 zeigen die Abnahme des Gehalts von Wasserstoffperoxid und Peressigsäure (PAA) in behandeltem Leitungswasser bei 23 °C bei Zugabe der in der rechten Spalte angeführten Menge an Optimase® CA 400L in µl/l.

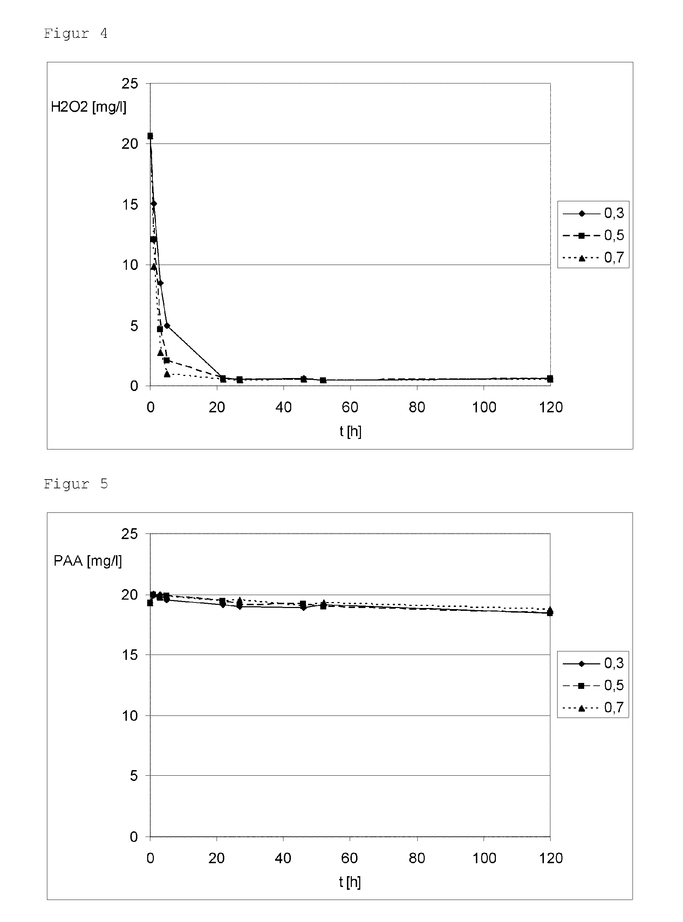

Figuren 4 und 5 zeigen in gleicher Weise die Abnahme des Gehalts von Wasserstoffperoxid und Peressigsäure in behandeltem Leitungswasser bei 2 °C.

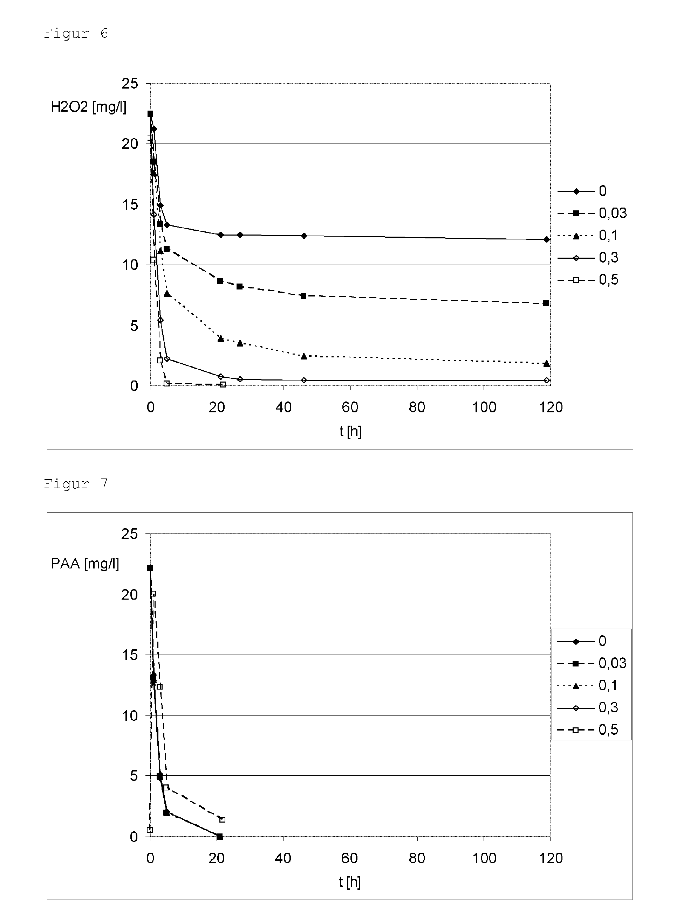

Figuren 6 und 7 zeigen analog die Abnahme des Gehalts von Wasserstoffperoxid und Peressigsäure in behandeltem Meerwasser bei 23 °C.

Figuren 8 und 9 zeigen die Abnahme des Gehalts von Wasserstoffperoxid und Peressigsäure in behandeltem Meerwasser bei 2 °C.

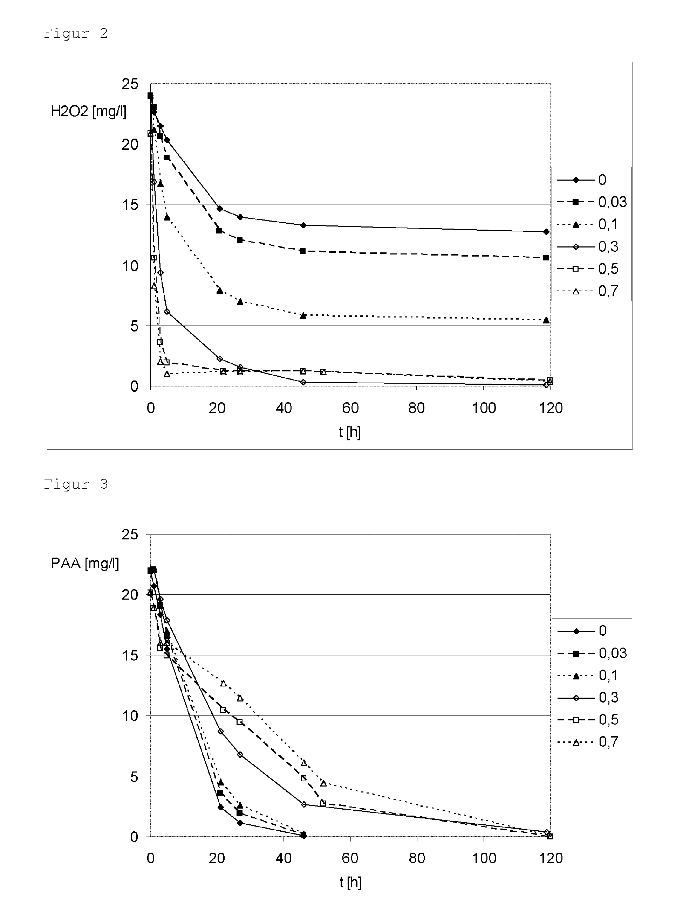

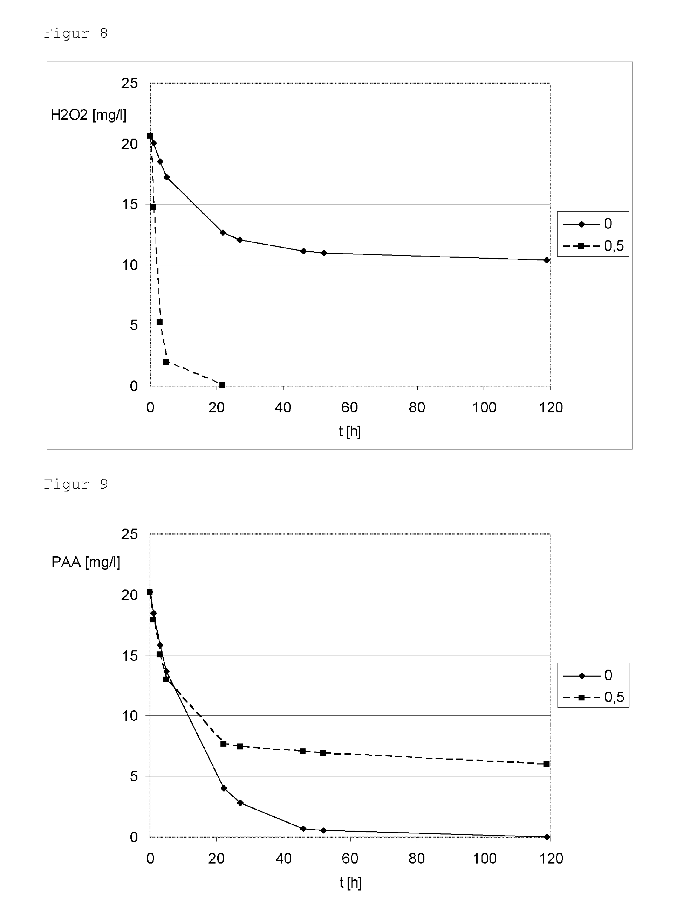

Die Figuren zeigen, dass bei steigender Menge an Katalase der Gehalt an Wasserstoffperoxid rascher abnimmt, da Wasserstoffperoxid durch die Katalase zersetzt wird. Die Figuren zeigen aber auch, dass überraschenderweise bei steigender Menge an Katalase der Gehalt an Peressigsäure langsamer abnimmt. Die Wirkung ist besonders ausgeprägt bei geringem Salzgehalt (Figur 3), sowie in Meerwasser bei niedriger Temperatur (Figur 9). Da Peressigsäure bei der Ballastwasserbehandlung eine viel höhere biozide Wirkung als Wasserstoffperoxid hat, kann deshalb durch Zugabe von Katalase überraschenderweise die biozide Wirkung von Gleichgewichtsperessigsäure bei der Ballastwasserbehandlung verstärkt werden, sodass eine wirksame Behandlung mit geringeren Mengen an Gleichgewichtsperessigsäure möglich wird oder bei gleicher Menge an Gleichgewichtsperessigsäure eine höhere Abtötungsrate von Organismen erreicht wird.

## Patentansprüche

1. Verfahren zur Behandlung von Ballastwasser auf einem Schiff, **dadurch gekennzeichnet, dass** bei Aufnahme von Ballastwasser in das Schiff dem Ballastwasser Gleichgewichtsperessigsäure und Katalase zugegeben werden, wobei Gleichgewichtsperessigsäure in einer Menge von 5 bis 50 mg/l Peressigsäure zugegeben wird und Katalase in einer Menge zugegeben wird, die im Ballastwasser innerhalb von 120 h den Gehalt des mit der Gleichgewichtsperessigsäure eingebrachten Wasserstoffperoxids auf weniger als 2 mg/l zersetzt.

2. Verfahren nach Anspruch 1, **dadurch gekennzeichnet, dass** das Ballastwasser bei Aufnahme in das Schiff eine Temperatur im Bereich von 0 bis 18 °C aufweist.

3. Verfahren nach Anspruch 1 oder 2, **dadurch gekennzeichnet, dass** das Ballastwasser bei Aufnahme in das Schiff eine Salinität im Bereich von 0 bis 16 aufweist.

4. Verfahren nach einem der Ansprüche 1 bis 3, **dadurch gekennzeichnet, dass** Katalase in einer Menge von 0,1 bis 40 Einheiten/l zugegeben wird.

5. Verfahren nach einem der Ansprüche 1 bis 4, **dadurch gekennzeichnet, dass** vor dem Ablassen von behandeltem Ballastwassers der Gehalt an Peressigsäure durch Zugabe eines Reduktionsmittels auf weniger als 1 mg/l verringert wird.

6. Verfahren nach Anspruch 5, **dadurch gekennzeichnet, dass** Natriumsulfit oder Natriumhydrogensulfit als Reduktionsmittels zugegeben wird.

7. Verfahren nach Anspruch 5 oder 6, **dadurch gekennzeichnet, dass** in dem behandelten Ballastwasser der Gehalt an Peressigsäure mit einem amperometrischen Sensor bestimmt wird und mit dem bestimmten Gehalt an Peressigsäure die Zugabe des Reduktionsmittels geregelt wird.

8. Vorrichtung zur Behandlung von Ballastwasser eines Schiffes, umfassend mindestens einen Ballastwassertank (1), eine Leitung (2, 3, 4, 5" 6, 7, 8) zum Befüllen des Ballastwassertanks und eine Leitung (8, 9, 3, 4, 10) zum Entleeren des Ballastwassertanks, **dadurch gekennzeichnet, dass** mit der Leitung zum Befüllen des Ballastwassertanks Dosiervorrichtungen (15, 16) für Gleichgewichtsperessigsäure und Katalase verbunden sind und mit der Leitung zum Entleeren des Ballastwassertanks eine Dosiervorrichtung (17) für ein Reduktionsmittel verbunden ist.

9. Vorrichtung nach Anspruch 8, **dadurch gekennzeichnet, dass** die Leitung zum Befüllen des Ballastwassertanks mit einer Durchflussmessvorrichtung (12) versehen ist, mit der die Dosiervorrichtungen (15, 16) für Gleichgewichtsperessigsäure und Katalase angesteuert werden.

10. Vorrichtung nach Anspruch 8 oder 9, **dadurch gekennzeichnet, dass** die Leitung zum Befüllen des Ballastwassertanks mit einer Temperaturmessvorrichtung (13) und/oder einer Messvorrichtung (14) für die Salinität versehen ist, mit der die Dosiervorrichtung (16) für Katalase angesteuert wird.

11. Vorrichtung nach einem der Ansprüche 8 bis 10, **dadurch gekennzeichnet, dass** die Leitung zum Entleeren des Ballastwassertanks mit einer Durchflussmessvorrichtung (12) und einem Sensor (24) für den Gehalt an Peressigsäure versehen ist, mit denen die Dosiervorrichtung (17) für ein Reduktionsmittel angesteuert wird.

12. Vorrichtung nach Anspruch 11, **dadurch gekennzeichnet, dass** der Sensor für den Gehalt an Peressigsäure ein amperometrischer Sensor ist.

13. Vorrichtung nach Anspruch 11 oder 12, **dadurch gekennzeichnet, dass** die Leitung zum Entleeren des Ballastwassertanks mit einer Messvorrichtung (14) für die Salinität versehen ist, mit der die Dosiervorrichtung (17) für ein Reduktionsmittel angesteuert wird.

14. Vorrichtung nach einem der Ansprüche 11 bis 13,
**dadurch gekennzeichnet, dass** die Leitung zum Entleeren des Ballastwassertanks mit einem Sensor (25) für den Gehalt an Wasserstoffperoxid versehen ist, mit dem die Dosiervorrichtung (17) für ein Reduktionsmittel angesteuert wird.

15. Vorrichtung nach einem der Ansprüche 8 bis 14, **dadurch gekennzeichnet, dass** in der Leitung zum Befüllen des Ballastwassertanks vor den Dosiervorrichtungen (15, 16) für Gleichgewichtsperessigsäure und Katalase eine Abtrennvorrichtung (28) für Partikel mit einer Größe im Bereich von 2 bis 100 µm angeordnet ist.
